# EUROPEAN PATENT APPLICATION

(11) **EP 4 752 525 A1**
(43) Date of publication of application: **03.06.2026**
(21) Application number: 23946218.7
(22) Date of filing: 26.07.2023
(51) Int. Cl.: G01N 15/00

(54) **METHOD FOR MEASURING CELLULAR MECHANICS IN IN VITRO FIBROSIS MODEL**

(71) Applicant: National Cheng Kung University, Tainan City 701 (TW)
(72) Inventor: LEE, Gang-Hui, Tainan City 701, Taiwan (TW); TANG, Ming-Jer, Tainan City 701, Taiwan (TW)
(74) Representative: Michalski Hüttermann & Partner Patentanwälte mbB
(86) International application number: PCT/CN2023/109368
(87) International publication number: WO 2025/020131

(57) **Abstract**

A method for measuring cellular mechanics in an in vitro fibrosis model comprises : (a) providing a plurality of microscope devices and assembling in a coaxial manner to form a coaxial microscope system for imaging; (b) placing the sample on a stage and scanning through the coaxial microscope system; (c) capturing a first image and a second image of the sample using the coaxial microscope system, generating the first image and the second image into a third image, and delineating cell boundary based on the third image; (d) defining a plurality of regions of interest in the third image; (e) determining the mechanical properties in the sample, including calculating a first elastic modulus of the cells and a second elastic modulus of protein in the regions of interest; and (f) obtaining the cell status in the sample, and comparing the first elastic modulus with the second elastic modulus.

## Description

### CROSS-REFERENCES TO RELATED APPLICATIONS

This application claims the benefit of PCT Application Serial No. PCT/CN2023/109368 filed on July 26, 2023. The entirety of the above application is incorporated herein by reference.

### BACKGROUND OF THE INVENTION

### Field of the Invention

The present invention relates to a method for measuring cellular mechanics in an in vitro fibrosis model, and more particularly to a method of using a coaxial microscope system to simultaneously acquire cell morphological images and mechanical properties for evaluating cell status.

### Descriptions of the Related Art

As is known in the art, conventional techniques for observing cells are typically based on fluorescence microscopy. This approach relies on fluorescent labeling of specific molecules or structures within a biological sample, which are then excited by a selected light source to emit a detectable fluorescent signal. High-contrast, high-resolution images produced in this manner allow investigators to visualize molecular distributions and physiological processes within cells. Confocal microscopy, a refinement of fluorescence microscopy, employs a pinhole to focus the excitation beam at a defined focal plane while excluding out-of-focus light, thereby improving image resolution and depth, reducing background noise, and enabling clearer three-dimensional imaging.

Atomic force microscopy (AFM) represents another approach for studying cells. AFM is a mechanical-sensing microscopy technique that enables real-time visualization of the morphology and structure of cell surfaces. Using a non-contact probe to scan the cell surface, AFM detects surface force interactions to generate detailed information about cell structure and texture. AFM also provides mechanical data, such as surface topography, stiffness, elastic modulus, and adhesion forces, and can even measure the mechanical properties of single biomolecules, making it valuable for investigating cell membrane proteins, extracellular matrices, and cell-cell interactions.

These existing techniques, however, are not without limitations. Imaging must still be performed separately, preventing simultaneous acquisition of complementary information. As a result, users spend additional time operating fluorescence and atomic force microscopes independently, verifying the accuracy of the respective scan areas, and allocating sufficient laboratory space to place both instruments.

Fibrosis is recognized as an irreversible pathological condition in humans. When tissue damage exceeds the body's ability to repair, the affected area transitions to fibrotic tissue composed of fibroblasts and extracellular matrix proteins such as collagen and fibronectin. Increased tissue stiffness is considered a hallmark of organ fibrosis, and stimulation by transforming growth factor-β (TGF-β) triggers activation of myofibroblasts, which correlates with extracellular matrix stiffness. At present, fibrotic diseases such as keloids are mainly studied through cell-based experiments, and suitable in vivo models for investigating cellular development across different stages of fibrosis remain lacking.

In view of the foregoing, the present invention provides a method for measuring cellular mechanics in an in vitro fibrosis model to address the deficiencies of the prior art.

### SUMMARY OF THE INVENTION

An objective of the present invention is to provide a method for measuring cellular mechanics in an in vitro fibrosis model that enables effective observation and evaluation of the structural and mechanical properties of cells and extracellular proteins in a sample. The method employs a novel coaxial microscope system that, in particular, integrates a fluorescence microscope and an atomic force microscope in a coaxial arrangement. By leveraging the combined technologies of these two microscopes, the user can simultaneously acquire detailed information on the morphological structure and mechanical properties of cells and extracellular proteins without having to perform separate operations. In this way, the method of the present invention offers a highly convenient, efficient, and accurate approach for observing and assessing cell status.

To achieve the above objective, the present invention discloses a method for measuring cellular mechanics in an in vitro fibrosis model. The method comprises: (a) providing a plurality of microscope devices and assembling the microscope devices in a coaxial arrangement to form a coaxial microscope system for imaging a sample; (b) placing the sample on a stage and scanning the sample with the coaxial microscope system; (c) acquiring a first image and a second image of the sample by the coaxial microscope system, generating a third image from the first image and second image, and delineating a cell boundary based on the third image; (d) defining a plurality of regions of interest in the third image respectively for cells and the proteins; (e) determining the mechanical properties of the sample, including calculating a first elastic modulus of the cells and a second elastic modulus of the proteins within the regions of interest; and (f) obtaining a cell state of the sample based on the third image by comparing the first elastic modulus with the second elastic modulus.

In one embodiment of the present invention, the regions of interest have variable shapes, and the microscope devices comprise a fluorescence microscope, an electron microscope, a laser scanning confocal microscope, a super-resolution fluorescence microscope, a scanning probe microscope, a magnetic tweezer microscope, an optical tweezer microscope, or an atomic force microscope.

In one embodiment of the present invention, the microscope devices are a combination of a laser scanning confocal microscope and an atomic force microscope.

In one embodiment of the present invention, the first image is a fluorescence image.

In one embodiment of the present invention, the first image is acquired from the laser scanning confocal microscope.

In one embodiment of the present invention, the second image is a height image and the third image is a merged image.

In one embodiment of the present invention, the second image is acquired from the atomic force microscope.

In one embodiment of the present invention, the proteins comprise elastin fibers, fibronectin fibers, collagen fibers, or laminin fibers.

In one embodiment of the present invention, the protein are collagen fibers in a single structural form.

In one embodiment of the present invention, the sample is a living unit of a fibrotic disease.

In one embodiment of the present invention, the living unit is a living cell.

In one embodiment of the present invention, the fibrotic disease comprises liver fibrosis, myelofibrosis, cardiac fibrosis, pulmonary fibrosis, skin fibrosis, cancer-associated fibrosis, or renal fibrosis.

In one embodiment of the present invention, the living cell is a renal fibroblast.

The detailed technology and preferred embodiments of the present invention are described in the following paragraphs, accompanied by the appended drawings, to enable those skilled in the art to fully understand the objectives, technical methods, and embodiments of the claimed invention.

### BRIEF DESCRIPTION OF THE DRAWINGS

FIG. 1 is a flowchart illustrating a method for measuring cellular mechanics in an in-vitro fibrosis model according to one embodiment of the present invention.
FIG. 2 is a schematic view illustrating a simplified experimental workflow for selecting the regions of interest and examining a sample using a coaxially integrated the confocal microscope and the atomic force microscope according to one embodiment of the present invention.
FIG. 3 shows, for one embodiment of the present invention, representative fluorescence images (the first images), morphological images (the second images), and merged images (the third images) of the control samples and the samples treated with transforming growth factor β1 (TGF-β1).
FIG. 4 is a schematic view illustrating fluorescein isothiocyanate (FITC) content in the control samples and the TGF-β1-treated samples according to one embodiment of the present invention.
FIG. 5 is a schematic view illustrating the regions of interest within the sample according to one embodiment of the present invention.
FIG. 6 is a schematic view illustrating the elastic modulus of the control samples and the TGF-β1-treated samples according to one embodiment of the present invention.
FIG. 7 is a schematic view illustrating the elastic modulus within the regions of interest of the control samples and the TGF-β1-treated samples according to one embodiment of the present invention.

### DETAILED DESCRIPTION OF THE PREFERRED EMBODIMENT

The embodiments of the present invention will now be described in detail with reference to the accompanying drawings. These embodiments are provided for illustrative purposes only and are not intended to limit the present invention, its applications, or the particular implementations described herein. Wherever applicable, the same reference numbers are used in the drawings and description to denote the same or similar components. It should be noted that, in the following embodiments and attached drawings, elements unrelated to the present invention have been omitted for simplicity, and the dimensional relationships among elements in the drawings are depicted for clarity of understanding rather than to represent actual scale.

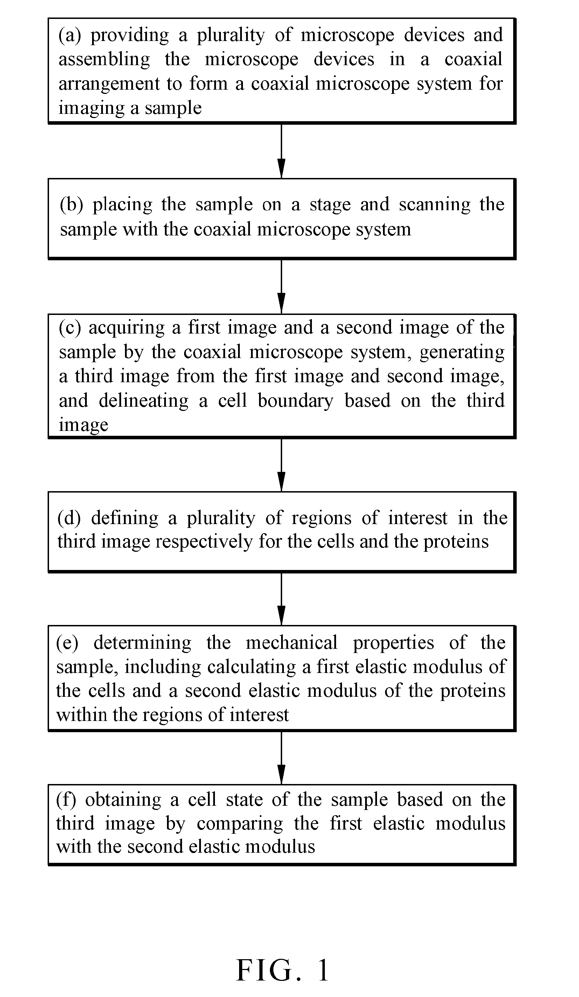

Please refer to FIG. 1, which a flow diagram illustrates one embodiment of the method for measuring cellular mechanics in an in-vitro fibrosis model according to the present invention. The principal steps include: (a) providing a plurality of microscope devices and assembling the microscope devices in a coaxial arrangement to form a coaxial microscope system for imaging a sample; (b) placing the sample on a stage and scanning it using the coaxial microscope system; (c) acquiring a first image and a second image of the sample with the coaxial microscope system, generating a third image from the first and second images, and delineating a cell boundary based on the third image; (d) defining a plurality of regions of interest (ROIs) in the third image respectively for the cells and the proteins; (e) determining the mechanical properties of the sample, including calculating a first elastic modulus of the cells and a second elastic modulus of the proteins within the regions of interest; and (f) obtaining the cell state of the sample based on the third image by comparing the first elastic modulus with the second elastic modulus.

Step (a) represents one of the key technical features of the method, namely the use of multiple microscope devices. In this embodiment, two different types of microscopes are combined coaxially to form the coaxial microscope system for imaging the sample. The microscope devices may include, for example, a fluorescence microscope, an electron microscope, a laser-scanning confocal microscope, a super-resolution fluorescence microscope, a scanning probe microscope, a magnetic-tweezers microscope, an optical-tweezers microscope, or an atomic-force microscope (AFM). In particular, one microscope is used to acquire fluorescence images of the sample, while another is used to acquire images reflecting cell mechanics and structural morphology. In this embodiment, the combination of the microscope devices used in the method of the present invention comprises a laser scanning confocal microscope and an atomic force microscope, forming a coaxial microscope system of the laser scanning confocal microscope and the atomic force microscope. It should be noted that, in the present embodiment, the microscope devices may be adjusted according to actual circumstances or specific usage requirements, and are not limited thereto.

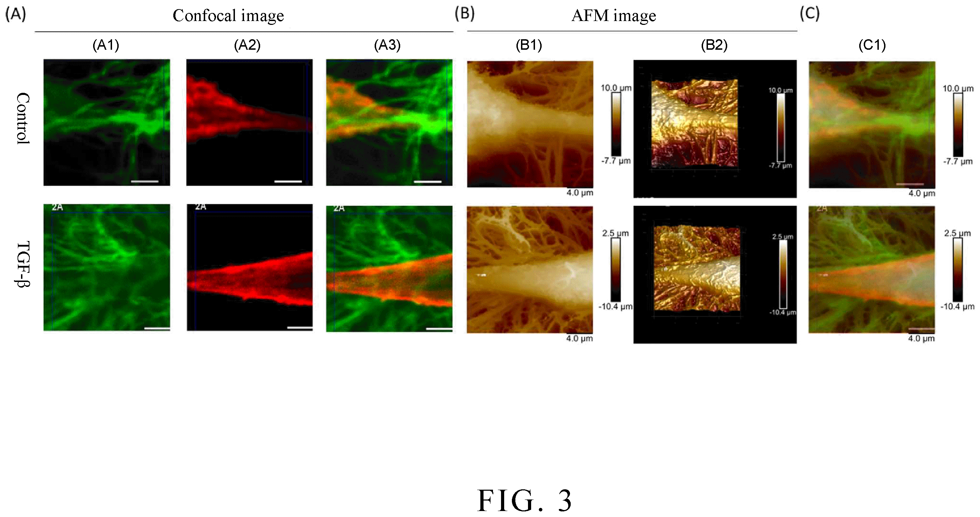

In step (b), the sample is placed on the stage of the coaxial microscope system and scanned. In step (c), the coaxial microscope system acquires a first image and a second image of the sample, overlays the two to generate a third image, and delineates a cell boundary based on the third image. Specifically, the first image is a fluorescence image of the sample, the second image is a surface height image of the sample, and the third image is generated by overlaying the first image and second image. The first image is acquired from a microscope device capable of capturing fluorescence images, such as a laser scanning confocal microscope. The second image is acquired from a microscope device capable of capturing images of cellular mechanical properties, structural morphology, or the like, such as an atomic force microscope. Next, step (d) involves defining a plurality of regions of interest (ROIs) with variable shapes inward or outward from the cell boundary in the third image. In the present embodiment, cells and surrounding proteins can be clearly delineated as shown in FIG. 3, and the regions of interest are selected from 1 µm² square areas, either randomly or non-randomly. It should be noted that, in the present embodiment, the number of pixels and the size of the regions of interest can be adjusted according to the actual situation or specific requirements, and are not limited thereto

After obtaining the image data, step (e) is performed to determine the mechanical characteristics of the sample-such as rigidity-by calculating a first elastic modulus of the cell and a second elastic modulus of the proteins within the regions of interest. Software analysis of the first elastic modulus and the second elastic modulus provides mechanical information for both the cell and its surrounding proteins. The proteins in the regions of interest may include elastin fibers, fibronectin fibers, collagen fibers, or laminin fibers. In a preferred embodiment, the proteins are collagen fibers of a single structural form.

Step (f) involves using the first image acquired by the confocal (or fluorescence) microscope and the second image acquired by the AFM, combining them into the third image to accurately determine cell distribution, morphology, and mechanical structures within the sample, and then comparing the first elastic modulus and second elastic modulus to obtain the cellular state.

In this embodiment, the sample is a living unit from a fibrotic disease model, preferably a living cell such as a renal fibroblast. The fibrotic diseases may include liver fibrosis, bone-marrow fibrosis, cardiac fibrosis, pulmonary fibrosis, dermal fibrosis, cancer-associated fibrosis, or kidney fibrosis. A preferred example includes kidney fibrosis or keloid disease.

### Materials and Methods

To clearly distinguish the cells from surrounding proteins, the method employs multiple fluorescent proteins for labeling. In this embodiment, rat renal fibroblasts (NRK-49F cells) were transfected to express Lifeact-RFP and cultured on collagen gels conjugated with FITC-labeled type-I collagen. The cultures were divided into a group treated with TGF-β1 and a control group without TGF-β1. TGF-β1 was added to mimic the activation of fibroblasts into myofibroblasts in fibrotic conditions such as kidney fibrosis and keloid, enabling subsequent analysis of cell contraction and collagen fiber interactions.

### Coaxial AFM and Confocal Microscope

In this embodiment, the coaxial microscope system combines a laser-scanning confocal microscope (FV3000, Olympus) with sharp tip probe-equipped atomic-force microscope (BioScope Resolve, Bruker) with a. Before measurement, the spring constant, deflection sensitivity, and position of the probe were calibrated using No-Touch mode in AFM and vision in confocal microscopy.

Additionally, prior to measurement, a hydrophobic material is coated onto the sharp tip probe of the atomic force microscope. This prevents the probe from adhering to collagen fibers during scanning of the sample, thereby maintaining measurement accuracy.

After calibration, the regions of interest can be selected, captured, and measured using the coaxial microscope system. The elastic moduli are calculated from force-distance curves using a modified Sneddon model implemented in Bruker data-analysis software. Collagen fibers and cells are further analyzed for morphology and rigidity using NanoScope Analysis software (v1.9, Bruker).

### Evaluation of Cell-Protein Mechanical Interactions

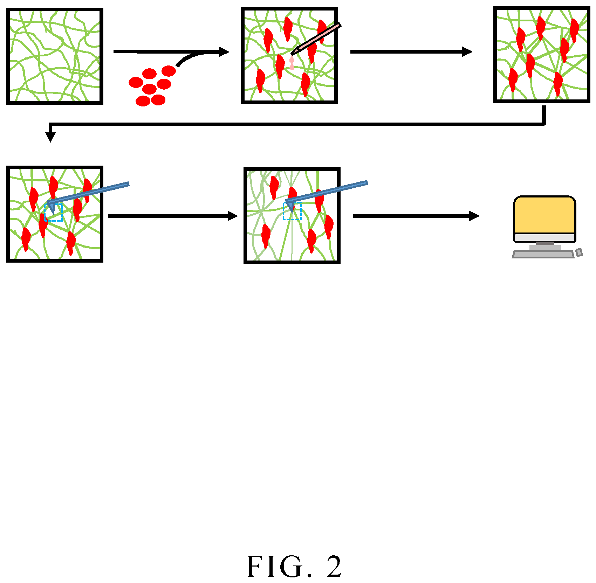

FIG. 2 schematically illustrates a simplified experimental workflow for selecting the regions of interest and examining the sample using a coaxial microscope system of the laser scanning confocal microscope and the atomic force microscope. FITC-labeled collagen gels are prepared and seeded with Lifeact-RFP-transfected NRK-49F cells. After 24 hours of culture, drugs are added and media are refreshed. The prepared sample is mounted on the coaxial microscope system, the scan area is marked, and the sample is adjusted to the pre-marked area. Subsequently, images are acquired using the coaxial confocal microscope and atomic force microscope. Finally, the fluorescence and morphological images are merged, and the mechanical properties of the cells and collagen fibers are analyzed using software

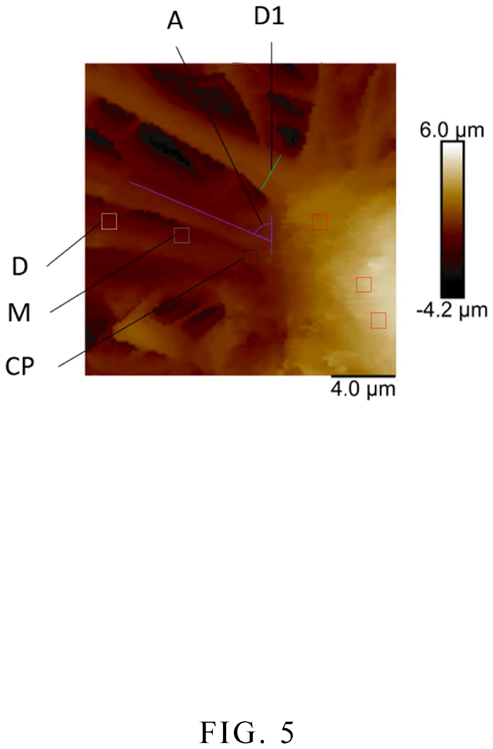

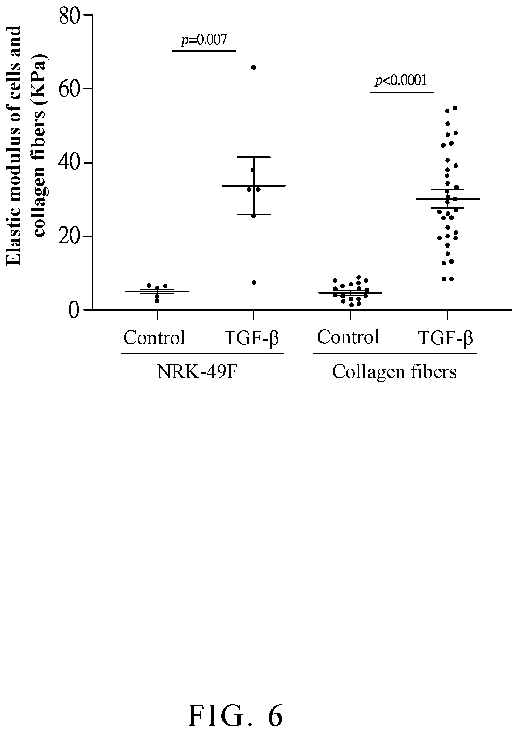

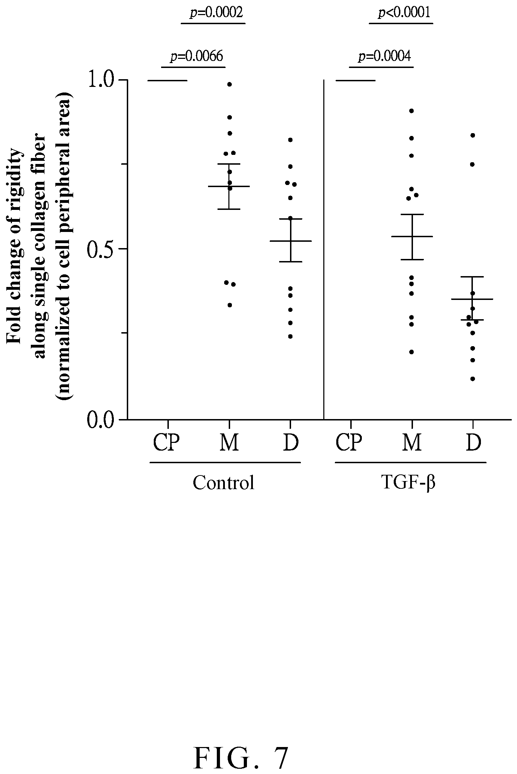

First, to distinguish the boundaries between cells and fibers, original fluorescence images are acquired using the confocal microscope, as shown in FIG. 3(A). Next, the original height images are acquired using the atomic force microscope, as shown in FIG. 3(B). The cell boundaries are then determined based on the foregoing, as illustrated in FIG. 3(C). Finally, square regions of interest are selected, as shown in FIG. 5. Analysis of the images acquired by the atomic force microscope indicates that treatment with TGF-β1 significantly increases the stiffness of collagen fibers and NRK-49F cells, by approximately 6.5-fold and 6.7-fold, respectively, as shown in FIG. 6. Furthermore, it is observed that the stiffer collagen fibers are frequently located near the NRK-49F cells, as shown in FIG. 7.

Next, to examine the morphology and mechanical properties of collagen fibers and living cells, the coaxial microscope system combining the atomic force microscope and confocal microscope of the present invention is used. The resulting images are shown in FIG. 3. In the confocal microscope images, collagen fibers can be clearly identified via the FITC-labeled fluorescent protein, and NRK-49F cells can be clearly identified via the Lifeact-RFP fluorescent protein, as shown in FIG. 3(A1) and FIG. 3(A2), respectively. When the two fluorescently labeled confocal images are merged, as shown in FIG. 3(A3), the relative positions of the collagen fibers and NRK-49F cells within the same selected area can be confirmed. Additionally, the height images and 3D reconstructed images obtained from the atomic force microscope provide the morphology and mechanical properties of the cells and collagen fibers, as shown in FIG. 3(B1) and FIG. 3 (B2). To further verify the accuracy of the coaxial microscope system, the confocal images and atomic force microscope images are merged and analyzed, as shown in FIG. 3(C1). The merged images exhibit a high degree of overlap, facilitating a more precise analysis of the interactions between cells and collagen fibers in the selected area.

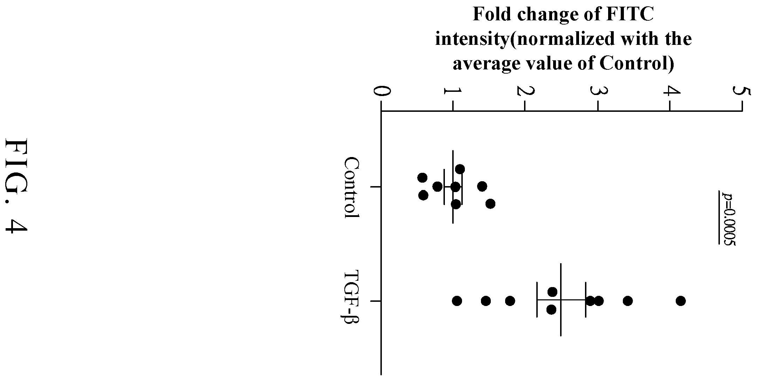

Additionally, as shown in FIG. 3 and FIG. 4, following TGF-β1 stimulation, the density of collagen fibers is markedly increased. The atomic force microscope images were further analyzed to measure the diameter of collagen fibers (D1), the angle between NRK-49F cells and collagen fibers (A), and the stiffness of the collagen fibers and NRK-49F cells, as shown in FIG. 5. Data analysis indicates that after TGF-β1 treatment, there is no significant difference in the diameter of collagen fibers or the angle between collagen fibers and NRK-49F cells (figure not shown). Furthermore, single collagen fibers (single structural form) were analyzed, as shown in FIG. 7, and changes in stiffness were measured and normalized with respect to the cell-proximal (CP) region. The results show that single collagen fibers located near NRK-49F cells (M) are stiffer than those located farther from NRK-49F cells (D).

These experimental results confirm that the present method-using a novel coaxial microscope system combining a laser-scanning confocal microscope and an atomic-force microscope-enables simultaneous observation of living cells and surrounding proteins for distribution, morphological changes, and mechanical properties. The coaxial microscope system of the present invention enables simultaneous acquisition of fluorescence images and mechanical property images in a selected region of interest, significantly reducing the time required to operate the two microscope devices independently and align them to the same selected region. In addition, it reduces the space required for placing the two microscope devices, thereby allowing highly efficient and accurate determination of cell states.

Although the present invention has been described in considerable detail with reference to certain embodiments thereof, other embodiments are possible. Therefore, the spirit and scope of the appended claims should not be limited to the description of the embodiments contained herein.

## Claims

1. A method for measuring cellular mechanics in an in-vitro fibrosis model, comprising:
(a) providing a plurality of microscope devices and assembling the microscope devices in a coaxial arrangement to form a coaxial microscope system for imaging a sample;
(b) placing the sample on a stage and scanning the sample with the coaxial microscope system;
(c) acquiring a first image and a second image of the sample by the coaxial microscope system, generating a third image from the first image and second image, and delineating a cell boundary based on the third image;
(d) defining a plurality of regions of interest in the third image respectively for the cells and the proteins;
(e) determining the mechanical properties of the sample, including calculating a first elastic modulus of the cells and a second elastic modulus of the proteins within the regions of interest; and
(f) obtaining a cell state of the sample based on the third image by comparing the first elastic modulus with the second elastic modulus.

2. The method of claim 1, wherein the regions of interest have variable shapes, and the microscope devices comprise a fluorescence microscope, an electron microscope, a laser scanning confocal microscope, a super-resolution fluorescence microscope, a scanning probe microscope, a magnetic tweezer microscope, an optical tweezer microscope, or an atomic force microscope.

3. The method of claim 2, wherein the microscope devices are a combination of the laser scanning confocal microscope and the atomic force microscope.

4. The method of claim 3, wherein the first image is a fluorescence image.

5. The method of claim 4, wherein the first image is acquired from the laser scanning confocal microscope.

6. The method of claim 3, wherein the second image is a height image and the third image is a merged image.

7. The method of claim 6, wherein the second image is acquired from the atomic force microscope.

8. The method of claim 1, wherein the proteins comprise elastin fibers, fibronectin fibers, collagen fibers, or laminin fibers.

9. The method of claim 8, wherein the proteins are collagen fibers in a single structural form.

10. The method of claim 1, wherein the sample is a living unit of a fibrotic disease.

11. The method of claim 10, wherein the living unit is a living cell.

12. The method of claim 10, wherein the fibrotic disease comprises liver fibrosis, myelofibrosis, cardiac fibrosis, pulmonary fibrosis, skin fibrosis, cancer-associated fibrosis, or renal fibrosis.

13. The method of claim 11, wherein the living cell is a renal fibroblast.
